# EUROPÄISCHE PATENTSCHRIFT

(11) **EP 2 416 994 B1**
(45) Veröffentlichungstag und Bekanntmachung des Hinweises auf die Patenterteilung: **20.02.2013**
(21) Anmeldenummer: 10713133.6
(22) Anmeldetag: 07.04.2010
(51) Int. Cl.: B60T 10/02

(54) **VERFAHREN ZUR VERMEIDUNG VON DRUCKSPITZEN IN EINEM ARBEITSMEDIUMKREISLAUF MIT EINER HYDRODYNAMISCHEN MASCHINE**
METHOD FOR PREVENTING PRESSURE PEAKS IN A WORKING MEDIUM CYCLE HAVING A HYDRODYNAMIC MACHINE
PROCÉDÉ DESTINÉ À ÉVITER LES POINTES DE PRESSION DANS UN CIRCUIT DE FLUIDE DE TRAVAIL COMPRENANT UNE MACHINE HYDRODYNAMIQUE

(30) Priorität: 09.04.2009 DE 102009016816
(43) Veröffentlichungstag der Anmeldung: 15.02.2012
(73) Patentinhaber: Voith Patent GmbH, 89522 Heidenheim (DE)
(72) Erfinder: LAUKEMANN, Dieter, 74564 Crailsheim (DE); BETZ, Jürgen, 74589 Satteldorf (DE); GEIER, Thomas, 88477 Schwendi (DE)
(74) Vertreter: Schmidt, Sven Hendrik
(86) Internationale Anmeldenummer: PCT/EP2010/002162
(87) Internationale Veröffentlichungsnummer: WO 2010/115609

(56) Entgegenhaltungen:
- WO-A1-2004/026652
- DE-A1- 4 341 213
- DE-A1- 4 447 166
- DE-A1-102006 008 110
- US-A- 3 863 739

## Beschreibung

Die Erfindung betrifft ein Verfahren zur Vermeidung von aufgrund des Betriebes einer hydrodynamischen Maschine erzeugten Druckspitzen in einem Arbeitsmediumkreislauf.

Hydrodynamische Maschinen weisen einen Arbeitsraum auf, der mit einem Arbeitsmedium befüllbar ist, um Antriebsleistung beziehungsweise Drehmoment von einem Primärrad auf ein Sekundärrad der hydrodynamischen Maschine zu übertragen.

Derartige hydrodynamische Maschinen - beispielsweise als hydrodynamischer Wandler oder als hydrodynamische Kupplung ausgeführt - sind dem Fachmann bekannt. Sie werden insbesondere im Antriebsstrang von Kraftfahrzeugen vorgesehen, um Antriebsleistung hydrodynamisch von der Antriebsmaschine des Kraftfahrzeugs auf die Antriebsräder oder ein anderes Aggregat zu übertragen. Auch können derartige hydrodynamische Maschinen als Retarder ausgeführt sein, wobei das Sekundärrad in diesem Fall stationär oder in entgegengesetzter Drehrichtung wie das Primärrad umlaufend ausgeführt ist. Dies ermöglicht bei befülltem Arbeitsraum eine Verzögerung des Primärrades und insbesondere einer mit dem Primärrad drehfest ausgeführten Welle, beispielsweise einer indirekt mit den Antriebsrädern des Fahrzeugs verbundenen Gelenkwelle oder Getriebeabtriebswelle. Die vorliegende Erfindung betrifft unter anderem diese genannten hydrodynamischen Maschinen.

Die vom Primärrad auf das Sekundärrad übertragene Antriebsleistung beziehungsweise das übertragene Moment - bei Ausbildung der hydrodynamischen Maschine als hydrodynamischer Retarder, das Bremsmoment - ist abhängig vom Füllungsgrad des Arbeitsraums der hydrodynamischen Maschine. Insbesondere nimmt mit zunehmendem Füllungsgrad, beginnend in einem vollständig oder weitgehend entleerten Zustand bis zu einem vollgefüllten Zustand, die übertragene Leistung beziehungsweise das übertragene Moment zu. Zum Befüllen und Entleeren des Arbeitsraumes beziehungsweise zum Kühlen der hydrodynamischen Maschine ist diese mittels eines Arbeitsmediumzu- und eines Arbeitsmediumablaufs an einen externen Arbeitsmediumkreislauf angeschlossen.

Das Ein- und Ausschalten der in den externen, das heißt außerhalb der hydrodynamischen Maschine verlaufenden Arbeitsmediumkreislauf eingebundenen hydrodynamischen Maschine führt zu einer Umschaltung des im Arbeitsmediumkreislauf zirkulierenden Arbeitsmediums, wodurch Druckspitzen im Arbeitsmediumkreislauf entstehen. Wenn beispielsweise die hydrodynamische Maschine eingeschaltet wird beziehungsweise deren Arbeitsraum schnell mit mehr Arbeitsmedium befüllt wird, so führt dies zu einem Druckabfall im Arbeitsmediumkreislauf außerhalb der hydrodynamischen Maschine, und wenn die hydrodynamische Maschine ausgeschaltet wird beziehungsweise deren Arbeitsraum schnell entleert wird, so speist die hydrodynamische Maschine ein bestimmtes Volumen von Arbeitsmedium in den Arbeitsmediumkreislauf außerhalb der hydrodynamischen Maschine, was zu einem entsprechenden Druckanstieg führt. Die Druckspitzen führen zu einer Belastung der im Arbeitsmediumkreislauf vorgesehenen Aggregate, bei einem Kühlsystem, insbesondere Fahrzeugkühlsystem als externen Arbeitsmediumkreislauf, wie es die vorliegende Erfindung gemäß einer Ausführungsform betrifft, beispielsweise der Wasserpumpe oder der Zylinderbuchsen des wassergekühlten Antriebsmotors. So bedeutet ein plötzlicher Druckabfall, auch als negative Druckspitze bezeichnet, die Gefahr des Auftretens von Kavitation.

Zwar werden herkömmlich Kühlkreisläufe mit einem Druckausgleichsbehälter ausgestattet, jedoch vermag ein üblicher Druckausgleichsbehälter ohne zusätzliche Maßnahmen (wie zum Beispiel eine besondere Kanalgestaltung des Ein- und/oder Auslasses) nicht, stark schwankende Volumenströme beziehungsweise schnelle Druckschwankungen rasch auszugleichen.

Die internationale Anmeldung WO 2004/026652 beschreibt eine Antriebseinheit mit einem Retarder im Kühlkreislauf eines Fahrzeugs, bei welcher ein Mittel zum Abziehen einer vorbestimmten Kühlmittelmenge aus dem Kühlkreislauf beim Ausschalten des Retarders und zum Zuführen einer vorbestimmten Kühlmittelmenge in den Kühlkreislauf beim Einschalten des Retarders vorgesehen ist. Durch diese Maßnahmen wird der im Kühlkreislauf zirkulierende Kühlmittelstrom trotz Ein- und Ausschalten des Retarders vergleichsweise konstant gehalten. Nachteilig ist jedoch der zusätzliche gerätetechnische und steuerungstechnische Aufwand.

DE 10 2006 008 110 A1 beschreibt eine Füllsteuerungsvorrichtung für eine hydrodynamische Maschine mit zwei Einlässen zum Zuführen von Arbeitsmedium in die und zwei Auslässen zum Abführen von Arbeitsmedium aus der hydrodynamischen Maschine. Alle Ein- und Auslässe sind zusammen mit einem Kraft- und/oder Weggeber oder einem Anschluss für einen solchen in einem gemeinsamen Steuerventil vorgesehen, welcher einen ersten Ventilkörper aufweist und durch den Kraft- und/oder Weggeber derart beaufschlagbar ist, dass er die Arbeitsmediumströmung in den Ein- und Auslässen durch den Kraft- und/oder Weggeber wenigstens mittelbar steuert oder regelt. Dabei wird beim Zuschalten der hydrodynamischen Maschine die Beaufschlagung des Ventilkörpers allmählich, beispielsweise in Form einer Rampe, erhöht.

Der Erfindung liegt die Aufgabe zugrunde, ein Verfahren zur Vermeidung von aufgrund des Betriebes einer hydrodynamischen Maschine erzeugten Druckspitzen in einem Arbeitsmediumkreislauf anzugeben, welches die Nachteile des Standes der Technik vermeidet. Insbesondere soll bereits beim Zu- oder Abschalten der hydrodynamischen Maschine in einen beziehungsweise aus einem externen Arbeitsmediumkreislauf das Auftreten von positiven oder negativen Druckspitzen verhindert oder zumindest gemindert werden.

Diese Aufgabe wird durch ein Verfahren nach dem unabhängigen Anspruch gelöst. Die abhängigen Ansprüche stellen bevorzugte Ausführungsformen der Erfindung dar.

Die Erfinder haben erkannt, dass durch gezieltes Variieren der Änderungsgeschwindigkeit (Geschwindigkeit der Änderung) des Strömungsquerschnitts für den Arbeitsmediumstrom in die und/oder aus der hydrodynamischen Maschine zum Befüllen und/oder Entleeren des Arbeitsraumes der hydrodynamischen Maschine in Abhängigkeit einer vorgegebenen Eingangsgröße das Auftreten von unerwünschten Druckspitzen beim Ein- und Ausschalten der hydrodynamischen Maschine vermieden werden kann und die Belastungen für die im Arbeitsmediumkreislauf angeordneten Aggregate reduziert werden können. Beim Einschalten wird die hydrodynamische Maschine hinsichtlich der Arbeitsmediumführung in den externen Arbeitsmediumkreislauf zugeschaltet und beim Ausschalten aus dem externen Arbeitsmediumkreislauf heraus- oder abgeschaltet.

Bei einem erfindungsgemäßen Verfahren zur Vermeidung von aufgrund des Betriebes einer hydrodynamischen Maschine erzeugten Druckspitzen in einem externen Arbeitsmediumkreislauf, wobei die hydrodynamische Maschine ein Primärrad und ein Sekundärrad umfasst, die miteinander einen torusförmigen, über einen Arbeitsmediumzu- und Arbeitsmediumablauf befüllbaren und entleerbaren Arbeitsraum ausbilden, um Drehmoment hydrodynamisch vom Primärrad auf das Sekundärrad zu übertragen, wird beim Zu- und Abschalten der hydrodynamischen Maschine vorteilhaft eine Stellgröße in ihrem zeitlichen Verlauf variiert, wodurch die Änderungsgeschwindigkeit des Strömungsquerschnittes für Arbeitsmedium, das in den Arbeitsraum und/oder aus diesem herausströmt, bestimmt wird. So können verschiedene zeitliche Verläufe der Stellgröße in Abhängigkeit einer vorgegebenen Eingangsgröße eingestellt werden.

Gemäß einer Ausführungsform wird der zeitliche Verlauf der eingestellten Stellgröße in Abhängigkeit der in der hydrodynamischen Maschine einzustellende Leistungsübertragung beziehungsweise des in der hydrodynamischen einzustellenden Momentes variiert. Besonders bevorzugt erfolgt beim Einstellen einer vergleichsweise niedrigen Leistungsübertragung in der hydrodynamischen Maschine die Änderung der Stellgröße und somit die Änderungsgeschwindigkeit des Strömungsquerschnitts für Arbeitsmedium vergleichsweise schneller und beim Einstellen einer vergleichsweise hohen Leistungsübertragung in der hydrodynamischen Maschine die Änderung der Stellgröße und somit die Änderungsgeschwindigkeit des Strömungsquerschnitts für Arbeitsmedium vergleichsweise langsamer. Insbesondere wird bei der vergleichsweise niedrigeren Leistungsübertragung der Strömungsquerschnitt für in die hydrodynamische Maschine strömendes Arbeitsmedium schneller vergrößert. Zusätzlich oder alternativ zum Variieren des zeitlichen Verlaufs der Stellgröße in Abhängigkeit der einzustellenden Leistungsübertragung kann der zeitliche Verlauf der Stellgröße auch in Abhängigkeit der Drehzahl einer Antriebsmaschine, insbesondere in Form eines Verbrennungsmotors, variiert werden, mittels welcher eine im externen Arbeitsmediumkreislauf zum Umwälzen des Arbeitsmediums angeordnete Pumpe und/oder die hydrodynamische Maschine angetrieben wird, variiert werden. So kann beispielsweise bei einer vergleichsweise größeren Drehzahl der Antriebsmaschine die Änderungsgeschwindigkeit des Strömungsquerschnitts für Arbeitsmedium, das in den Arbeitsraum und/oder aus dem Arbeitsraum der hydrodynamischen Maschine herausströmt, größer eingestellt werden, als bei einer vergleichsweise kleineren Drehzahl. Dadurch können unerwünschte Druckspitzen besonders dann gemindert werden, wenn die durch die Antriebsmaschine angetriebene Pumpe, insbesondere Kühlwasserpumpe in einem Kühlkreislauf, beispielsweise Fahrzeugkühlkreislauf, bei einer größeren Drehzahl der Antriebsmaschine einen größeren Volumenstrom von Arbeitsmedium beziehungsweise Kühlmedium im externen Arbeitsmediumkreislauf beziehungsweise Kühlkreislauf umwälzt, als bei einer kleineren Drehzahl. Durch das Umschalten des vergleichsweise größeren Volumenstroms beim Ein- und/oder Ausschalten der hydrodynamischen Maschine birgt der größere Volumenstrom nämlich eine hohe Gefahr stärkerer Druckschwankungen.

Eine weitere Größe, die zusätzlich oder alternativ als Eingangswert für das gezielte Variieren des zeitlichen Verlaufs der Stellgröße, um die Änderungsgeschwindigkeit des Strömungsquerschnittes zu verändern, herangezogen werden kann, ist die Temperatur des Arbeitsmediums. Insbesondere wird bei einer vergleichsweise höheren Temperatur die Änderungsgeschwindigkeit des Strömungsquerschnitts für Arbeitsmedium vermindert.

Eine weitere mögliche Eingangsgröße ist der Druck des Arbeitsmediums und/oder der Druck, insbesondere Luftdruck, eines im Arbeitsmediumkreislauf vorgesehenen Ausgleichsbehälters oder Vorratsbehälters. Auch hier gilt insbesondere, dass bei einem vergleichsweise höheren Druck die Änderungsgeschwindigkeit des Strömungsquerschnitts für Arbeitsmedium kleiner ist, insbesondere das Öffnen eines Ventils in einem Arbeitsmediumzulauf der hydrodynamischen Maschine langsamer erfolgt.

Schließlich kann auch die Drehzahl einer im externen Arbeitsmediumkreislauf angeordneten Arbeitsmediumpumpe und/oder die Drehzahl der hydrodynamischen Maschine, insbesondere deren Primärrades, erfasst oder bestimmt werden und als Eingangsgröße zum variablen Einstellen der Änderungsgeschwindigkeit des Strömungsquerschnitts beziehungsweise zum Variieren des zeitlichen Verlaufs der Stellgröße herangezogen werden, wobei vorteilhaft bei einer größeren Drehzahl die Änderungsgeschwindigkeit kleiner ist. Hinsichtlich der Öffnungsgeschwindigkeit eines Ventils im Einlass gilt auch hier das zuvor Ausgeführte.

Ebenso ist es denkbar, die Änderungsgeschwindigkeit des Strömungsquerschnitts für Arbeitsmedium insbesondere beim Zuschalten der hydrodynamischen Maschine in Abhängigkeit einer vorgegebenen Eingangsgröße zu ändern, indem die Stellgröße selbst insbesondere unabhängig von der Zeit variiert wird. Als Stellgröße dient dann insbesondere eine Wegkomponente, zum Beispiel der Betätigungsweg oder die Position des Ventils und/oder eine Kraftkomponente, zum Beispiel der Steuerdruck oder die Betätigungskraft des Ventils. Somit kann die Betätigungskraft in Abhängigkeit des Betätigungswegs (Kraft-Weg-Verlauf) variiert werden, um die Geschwindigkeitsänderung des Strömungsquerschnitts des Ventils zu verändern. Ein solcher Kraft-Weg-Verlauf kann in Abhängigkeit der auftretenden Druckreaktionskräfte im Arbeitsmediumkreislauf eingestellt werden. Diese Ausführungsform kann beispielsweise anstelle oder zusätzlich zu den bereits beschriebenen Ausführungsformen Verwendung finden.

Die Erfindung soll nachfolgend anhand von Ausführungsbeispielen und der beigefügten Figuren exemplarisch erläutert werden.

Es zeigen:
- Figur 1: eine symbolhafte Darstellung eines Antriebsstranges mit einem in einem Arbeitsmediumkreislauf eines Kraftfahrzeuges angeordneten hydrodynamischen Retarder;
- Figuren 2, 3, 4: den Verlauf einer Stellgröße in Abhängigkeit der Zeit bei einem Zuschaltvorgang der hydrodynamischen Maschine;
- Figur 5: einen erfindungsgemäßen Befüllungsvorgang einer hydrodynamischen Maschine, umfassend Zuschalt- und Abschaltvorgänge;
- Figur 6: eine symbolhafte Darstellung eines Ventils zur Einstellung eines Strömungsquerschnitts für Arbeitsmedium;
- Figur 7: den symbolhaften Verlauf des Steuerdruckes in Abhängigkeit des Weges bei einem Zuschaltvorgang der hydrodynamischen Maschine gemäß einer weiteren Ausführungsform.

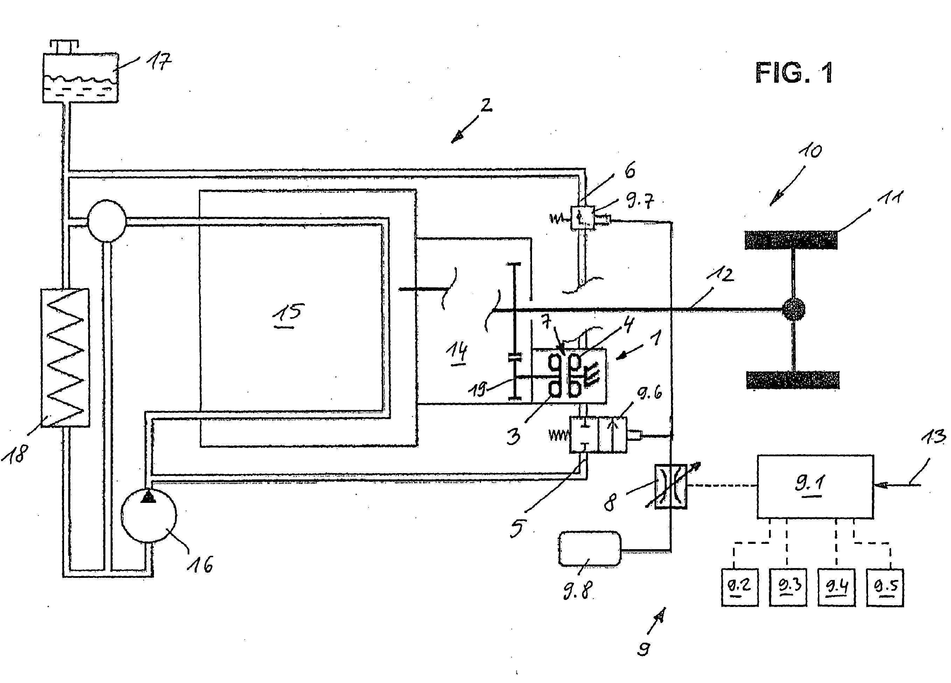

In der Figur 1 ist ein Antriebsstrang 10 eines Fahrzeugs mit einem externen Arbeitsmediumkreislauf 2 dargestellt. Vorliegend stellt der Arbeitsmediumkreislauf 2 einen Kühlkreislauf dar. Des Weiteren ist im externen Arbeitsmediumkreislauf 2 eine hydrodynamische Maschine 1, im vorliegenden Fall ein hydrodynamischer Retarder angeordnet, welcher vorliegend als Wasserretarder ausgeführt ist, so dass dessen Arbeitsmedium gleichzeitig das Kühlmedium des Kühlkreislaufs des Fahrzeugs darstellt.

In Strömungsrichtung hinter dem Retarder gesehen sind folgende Komponenten im Arbeitsmediumkreislauf 2 angeordnet: ein Ventil 9.7, die Einmündung eines Ausgleichsbehälters 17, ein Wärmetauscher 18, eine Umwälzpumpe 16 und ein weiteres Ventil 9.6. Das Ventil 9.7 ist vorliegend im Bereich eines Arbeitsmediumablaufs 6 und das Ventil 9.6 im Bereich eines Arbeitsmediumzulaufs 5 im Arbeitsmediumkreislauf 2 angeordnet. In Strömungsrichtung im Arbeitsmediumkreislauf 2 parallel zum hydrodynamischen Retarder ist ein Verbrennungsmotor 15 angeordnet. Selbstverständlich wäre es auch denkbar, den hydrodynamischen Retarder und den Verbrennungsmotor 15 in Reihe zueinander anzuordnen. Ferner könnten die beiden Ventile 9.6 und 9.7 zu einem gemeinsamen Ventil (Kombiventil) zusammengefasst werden.

Der hydrodynamische Retarder ist vorliegend als Sekundärretarder ausgeführt, das bedeutet, er wird in Abhängigkeit der Fahrgeschwindigkeit des Fahrzeugs angetrieben. Vorliegend ist der Retarder auf einer Nebenabtriebswelle 19 eines Getriebes 14 angeordnet. Der Retarder weist ein Primärrad 3, welches mit der Nebenabtriebswelle 19 drehfest ausgeführt ist, auf. Weiterhin umfasst der Retarder ein Sekundärrad 4, welches vorliegend stationär ausgeführt ist und beispielsweise einen Teil eines Retardergehäuses bildet.

Die Nebenabtriebswelle 19 steht vorliegend über einen Stimradsatz und über eine Getriebeabtriebswelle 12 in einer Triebverbindung mit Antriebsrädern 11. Bei Anforderung einer Bremsleistung durch den Fahrer, beispielsweise durch Betätigung eines Bremspedals oder Bremshebels, werden die Antriebsräder 11 über die Getriebeabtriebswelle 12, den Stirnradsatz, die Nebenabtriebswelle 19 und den Retarder verzögert. Zum Einstellen eines vorbestimmten Arbeitsmediumdruckes im Arbeitsraum des hydrodynamischen Retarders wird der Strömungsquerschnitt wenigstens eines Ventils 9.6, 9.7 verändert, um den Füllungsgrad des Arbeitsraums mit Arbeitsmedium zu regeln. Vorliegend werden die beiden Ventile 9.6, 9.7 von einem Steuerdruckventil 8, welches in diesem Fall als pneumatisches Ventil ausgeführt ist, angesteuert. Hierzu wird Luftdruck in einem pneumatischen Druckbehälter 9.8 oder einem Druckluftsystem bereitgestellt. Das Steuerdruckventil 8 kann beispielsweise als Proportionalventil oder als Stetigventil, wie beispielsweise Servoventil, ausgeführt sein.

Das Steuerdruckventil 8 wird vorliegend von einer Füllsteuereinrichtung 9 angesteuert. Bei bekannten Retardem folgt durch Betätigen eines Bremspedals oder eines sonstigen Aktuators, beispielsweise eines Wählhebels (nicht dargestellt), ein Signal zum Einleiten eines Bremsvorgangs in Form einer Bremsanforderung 13. Der Strömungsquerschnitt für Druckluft des Steuerdruckventils 8 wird vergrößert, so dass Druckluft aus dem Druckluftbehälter 9.8 oder einem Druckluftsystem zugleich beide Ventile 9.6 und 9.7 mit zunehmendem Druck beaufschlagt. Hierbei wird insbesondere das Ventil 9.6 in Durchlassstellung geschaltet, so dass Arbeitsmedium aus dem Arbeitsmediumkreislauf 2 über den Arbeitsmediumzulauf 5 in den Retarder gelangt, und das Ventil 9.7 wird in eine Regelstellung gebracht, die zum Einstellen des gewünschten Bremsmomentes führt. Das Primärrad 3, mit diesem die Nebenabtriebswelle 19, die Getriebeabtriebswelle 12 und schließlich die Räder 11 werden durch Ausbilden eines hydrodynamischen Kreislaufes im Arbeitsraum des Retarders zwischen dem Primärrad 3 und dem Sekundärrad 4 verzögert.

Ein zu schnelles Umschalten - Öffnen und Schließen - insbesondere des Ventils 9.6, welches vorliegend als Ein-Aus-Ventil ausgeführt ist, würde zu Druckspitzen im externen Arbeitsmediumkreislauf 2 führen. Um diese Druckspitzen zu verhindern oder betragsmäßig zu senken, wird erfindungsgemäß der Strömungsquerschnitt für Arbeitsmedium, vorliegend zumindest des Ventils 9.6 und insbesondere auch des Ventils 9.7, nicht schlagartig, sondern über der Zeit gezielt variiert. Dabei bedeutet gezielt variiert, zumindest in Bezug auf das Ventil 9.6 im Arbeitsmediumzulauf 5, dass der Strömungsquerschnitt ausgehend von einem Minimalwert bei abgeschalteter hydrodynamischer Maschine bei Zuschalten des hydrodynamischen Retarders auf einen maximalen Strömungsquerschnitt gesteuert/geregelt wird, oder bei dem Ventil 9.7 im Arbeitsmediumablauf 6 der Strömungsquerschnitt von seinem Ausgangswert, insbesondere in der geschlossenen oder geöffneten Stellung, auf einen Querschnitt geändert wird, welcher der angeforderten Leistungsübertragung der hydrodynamischen Maschine beziehungsweise des angeforderten Dreh- oder Bremsmoments entspricht. Diese Regelung/Steuerung wird mittels des fremdbetätigbaren Steuerdruckventils 8 der Füllsteuereinrichtung 9 über den eingestellten zeitlichen Verlauf einer Stellgröße durchgeführt, welche die Änderungsgeschwindigkeit des Strömungsquerschnitts für Arbeitsmedium bestimmt. Als Stellgröße dient beispielsweise der pneumatische Druck, der im Steuerdruckventil 8 eingeregelt wird.

Andere Parameter, die sich auf die Änderungsgeschwindigkeit des Strömungsquerschnitts für Arbeitsmedium in dem Ventil 9.6 und/oder 9.7 auswirken, können zusätzlich oder alternativ herangezogen werden. Wenn das Ventil 9.6 und/oder das Ventil 9.7 beispielsweise als elektromagnetisch betätigtes Ventil ausgeführt ist/sind, kann als Stellgröße der die Magnetkraft erzeugende Strom und/oder die Spannung verwendet werden. Bei einem hydraulisch oder mechanisch betätigten Ventil kann als Stellgröße entweder der hydraulische Betätigungsdruck oder, wie auch bei einem pneumatisch oder magnetisch oder anders betätigten Ventil, der Weg oder die Position des Ventilkolbens herangezogen werden.

Der zeitliche Verlauf der Stellgröße wird in Abhängigkeit einer vorgegebenen Eingangsgröße variiert werden. Die Eingangsgröße kann durch einen Sensor erfasst oder auch berechnet werden. In der Figur 1 sind schematisch vier Sensoren 9.2, 9.3, 9.4 und 9.5 dargestellt. Beispielsweise könnte der Sensor 9.2 die Temperatur des Arbeitsmediums im Arbeitsmediumkreislauf 2 oder insbesondere im Ausgleichsbehälter 17 erfassen, der Sensor 9.3 den Druck des Arbeitsmediums, insbesondere an den genannten Stellen. Der Sensor 9.4 steht beispielhaft für die Erfassung einer durch den Fahrer angeforderten Bremsleistung, insbesondere der Stellung eines Bremspedals oder Wählhebels. Der Sensor 9.5 steht beispielhaft für die Erfassung einer Drehzahl, beispielsweise der Drehzahl des Verbrennungsmotors 15, der Getriebeabtriebswelle 12, der Nebenabtriebswelle 19 oder der Antriebsräder 11. Auch ist es möglich, das gezielte Variieren des zeitlichen Verlaufs der Stellgröße in Abhängigkeit der Geschwindigkeit oder der Beschleunigung des Fahrzeugs auszuführen, wobei wiederum entsprechende Sensoren (nicht gezeigt) vorgesehen sein können, die die Größe entsprechend unmittelbar aufnehmen oder Messwerte zur Verfügung stellen, aus welchen die Größen berechnet werden können.

Selbstverständlich sind die gezeigten Sensoren 9.2 bis 9.5 sowie deren Anzahl nur beispielhaft zu verstehen und andere Eingangsgrößen können zum Variieren des zeitlichen Verlaufs der Stellgröße herangezogen werden.

Die Sensoren 9.2 bis 9.5 können über Signalleitungen mit der Steuereinrichtung 9.1 in Verbindung stehen. Zusätzlich oder alternativ zu den Sensoren 9.2 bis 9.5 kann auch die Steuereinrichtung 9.1 mit einem Fahrzeugassistenzsystem, einer Motor- oder einer Getriebesteuerung in Verbindung stehen, so dass in Abhängigkeit der durch diese Steuerungen oder Systeme zur Verfügung gestellten Größen die Stellgröße oder die Änderungsgeschwindigkeit des Strömungsquerschnitts für Arbeitsmedium, das in den Arbeitsraum und/oder aus diesem herausströmt, variiert wird.

In der Steuereinrichtung 9.1 können vorteilhaft Kennlinien und/oder Kennfelder hinterlegt sein, in welchen der zeitliche Verlauf der Stellgröße beziehungsweise die Änderungsgeschwindigkeit des Strömungsquerschnitts für Arbeitsmedium, das in die oder aus der hydrodynamischen Maschine strömt, vorliegend in den oder aus dem Retarder, in Abhängigkeit wenigstens einer Eingangsgröße zumindest mittelbar vorgegeben wird. Insbesondere wird der zeitliche Verlauf des Ansteuerdruckes, hier des durch das Steuerdruckventil 8 eingestellten pneumatischen Druckes, einer oder mehreren Eingangsgrößen zugeordnet.

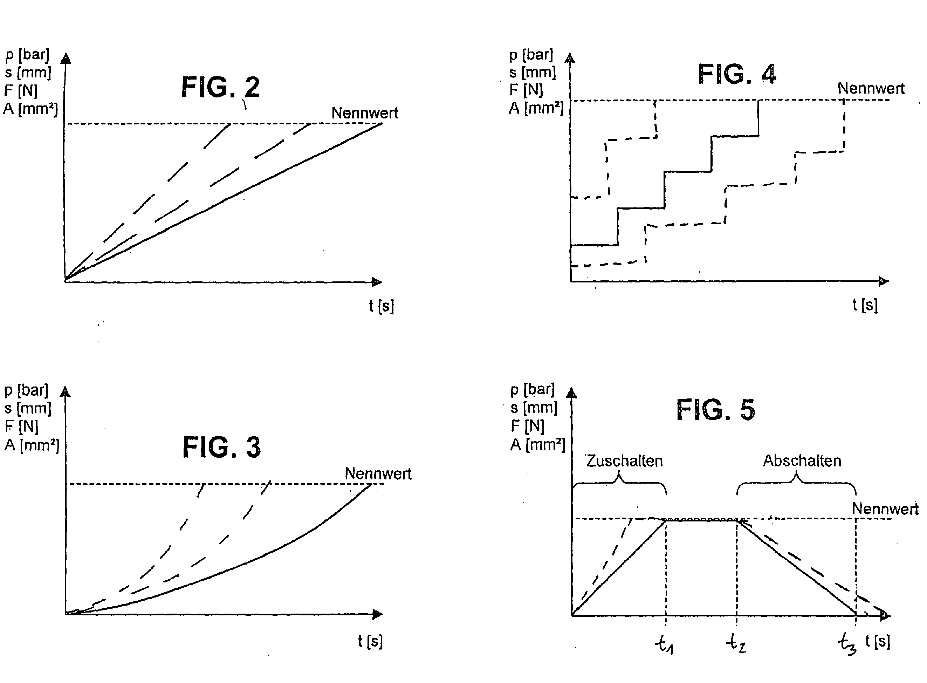

Die Figuren 2, 3 und 4 zeigen vorliegend den Zuschaltvorgang einer hydrodynamischen Maschine 1, wobei der in Abhängigkeit einer Eingansgröße gezielt eingestellte zeitliche Verlauf der Stellgröße bis zu einem Maximalwert (Nennwert) dargestellt ist. Der Nennwert entspricht beispielsweise dem Steuerdruck, der erforderlich ist, um den entsprechend der Leistungsanforderung an die hydrodynamische Maschine benötigten Füllungsgrad im Arbeitsraum einzustellen. Er entspricht dem Druck, der bei herkömmlichen Retardern zur Betätigung des Ventils 9.7 (Figur 1) in die gewünschte Schaltstellung beziehungsweise Regelstellung erforderlich ist.

Gemäß den Figuren 2 bis 5 sind über der Zeit t mögliche Stellgrößen wie der pneumatische Druck p, die Ventilstellung s, die Betätigungskraft F oder der Strömungsquerschnitt A des Steuerdruckventils 8 aufgetragen.

In Figur 2 ist ein linearer zeitlicher Verlauf der Stellgröße dargestellt. Vorliegend ist somit die Änderungsgeschwindigkeit des Strömungsquerschnitts für Arbeitsmedium pro Zeiteinheit konstant, wobei die Steigung der Geraden den Betrag der Änderungsgeschwindigkeit angibt. In Abhängigkeit einer oder mehrerer vorgegebenen Einheitsgrößen wird die Steigung geändert, siehe die gestrichelten Linien.

In Figur 3 ist ein progressiver zeitlicher Verlauf der Stellgröße ersichtlich. Die gestrichelten Linien zeigen mögliche Variationen in Abhängigkeit der Eingangsgröße.

Figur 4 zeigt einen treppenförmigen zeitlichen Verlauf der Stellgröße bis zu einem gewünschten Nennwert.

Auch andere, insbesondere stetig verlaufende Verläufe, welche insbesondere frei von Sprungstellen sind, sind denkbar.

Im Gegensatz zu den Figuren 2 bis 4 zeigt die Figur 5 einen vollständigen Zu- und Abschaltvorgang der hydrodynamischen Maschine. Wie ersichtlich ist, erfolgt das Zuschalten ausgehend von t = 0 bis t₁ entsprechend dem Verlauf von Figur 2. Im Punkt t₁ ist der gewünschte Nennwert, und insbesondere der Nenndruck erreicht. Der Druck wird anschließend im Wesentlichen konstant gehalten (zur t-Achse paralleler Abschnitt t₁ bis t₂), so dass sich die Arbeitsmediummenge im Arbeitsraum einstellt, die nötig ist, um den gewünschten Füllungsgrad für die entsprechende Leistungsübertragung zu erhalten. Soll die hydrodynamische Maschine abgeschaltet werden, so wird vorliegend durch Betätigen des Ventils 9.6 (Figur 1) die hydrodynamische Maschine 1 vom externen Arbeitskreislauf 2 getrennt. Dies geschieht wiederum nicht schlagartig, sondern folgt vorliegend einem linearen Verlauf. Beim Abschalten wird somit ausgehend vom Punkt t₂ bis t₃ der Nennwert auf einen Minimalwert abgesenkt. Wie aus der Figur 5 ersichtlich ist, weisen die Abschnitte des Zu- und Abschaltvorganges unterschiedliche Steigungen auf. Dies rührt daher, dass die hydrodynamische Maschine in der Regel eine Pumpwirkung aufweist, welche die Pumpwirkung der Umwälzpumpe im Arbeitskreislauf 2 verstärkt, wodurch sich besonders beim Abschalten die Gefahr von Druckspitzen erhöht. Der gestrichelte dargestellte Verlauf zeigt ein vergleichsweise schnelleres Zuschalten und langsames Abschalten.

Selbstverständlich ist es möglich, lineare und andere zeitliche Verläufe in Abhängigkeit der Eingangsgröße wahlweise einzustellen und somit beispielsweise die Verläufe gemäß der Figuren 2 bis 4 insbesondere in einem Kennfeld zum kombinieren.

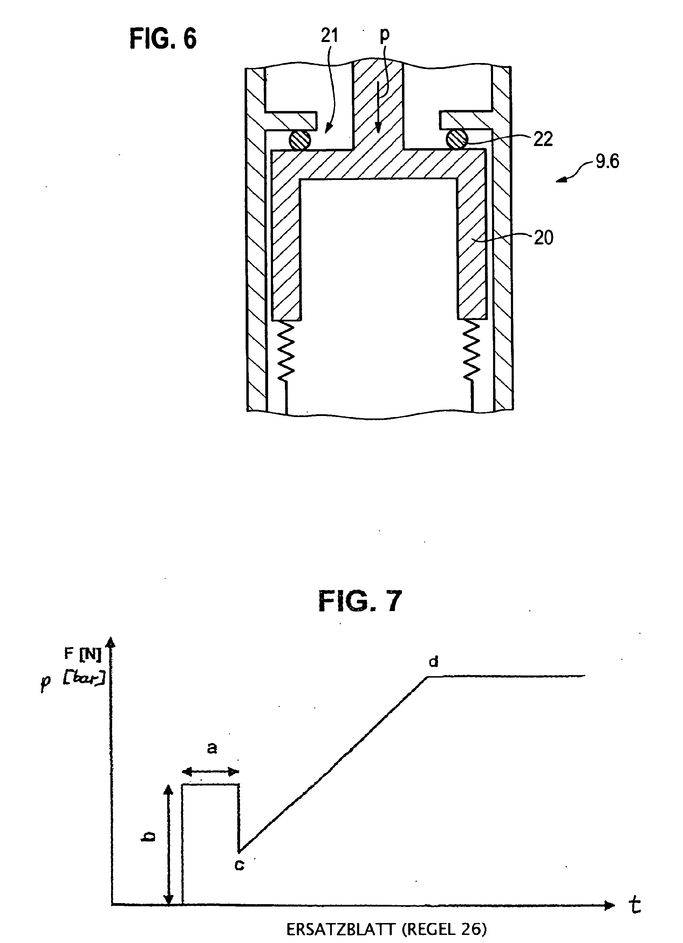

In der Figur 6 ist eine schematische Darstellung eines möglichen Ventils gezeigt, mit welchem der Füllungsgrad im Arbeitsraum der hydrodynamischen Maschine eingestellt werden kann. Beispielsweise kann dieses Ventil an der Stelle des Ventils 9.6 in der Figur 1 verwendet werden, wobei es insbesondere die Funktion dieses Ventils 9.6 als Teil eines kombinierten Ventils erfüllt, und das kombinierte Ventil sowohl das Ventil 9.6 als auch das Ventil 9.7 der Figur 1 umfasst. Das Ventil gemäß der Figur 6 weist einen Ventilsitz 21 und einen gegen den Ventilsitz 21 mittels einer Feder elastisch vorgespannten Ventilstößel 20 auf. Aufgrund eines nicht dargestellten Bypasses um die hydrodynamische Maschine herrscht im ausgeschalteten Zustand der hydrodynamischen Maschine, das heißt wenn das Ventil gemäß der Figur 6 geschlossen ist, dadurch, dass der Ventilstößel 20 abdichtend am Ventilsitz 21 anliegt, ein Gleichgewicht zwischen dem Druck im Arbeitsmedium auf beiden Seiten des Ventilstößels 20, das heißt in der gezeigten Darstellung oberhalb des Ventilstößels 20 und unterhalb des Ventilstößels 20. Der Bypass um die hydrodynamische Maschine verbindet nämlich die beiden Seiten des Ventilstößels 20 arbeitsmediumleitend miteinander, wohingegen im geöffneten Zustand des Ventils der Ventilstößel 20 den Bypass vorteilhaft teilweise oder vollständig verschließt und zugleich eine Arbeitsmediumströmung, insbesondere von oberhalb des Ventilstößels 20, in den Arbeitsraum der hydrodynamischen Maschine freigibt.

Die mit Arbeitsmediumdruck beaufschlagten Flächen am Ventilstößel 20, die sich gegenüberliegen, sind aufgrund der Abdichtung 22 des Ventilstößels 20 gegen den Ventilsitz 21 unterschiedlich groß. Dies führt zu einer resultierenden Druckkraft trotz demselben Arbeitsmediumdruck beidseits des Ventilstößels 20 auf den Ventilstößel 20 im Sinne eines Schließens des Ventils und somit sich aufaddierend auf die Kraft der vorspannenden Feder. Ein Vorteil dieser Ausgestaltung ist, dass das Ventil im ausgeschalteten Zustand der hydrodynamischen Maschine sicher verschlossen gehalten wird. Als Nachteil ist anzusehen, dass zum Öffnen des Ventils eine größere Kraft auf den Ventilstößel 20 aufgebracht werden muss.

Wenn nun der Ventilstößel 20 in Richtung weg vom Ventilsitz 21 bewegt wird, insbesondere mittels eines pneumatischen Steuerdruckes p, der an einer geeigneten Stelle an dem Ventilstößel 20 angreift, oder mittels einer anderen geeigneten Kraft, so muss zum Abheben des Ventilstößels 20 vom Ventilsitz 21 eine Kraft aufgebracht werden, welche die Kraft der das Ventil schließenden Feder und die Kraft aus der Differenz zwischen den unterschiedlich großen, mit Arbeitsmediumdruck beaufschlagten Flächen des Ventilstößels 20 beidseits desselben überwindet. Sobald jedoch der Ventilstößel 20 durch diese Kraft vom Ventilsitz 21 abgehoben wurde, gleichen sich die mit Arbeitsmediumdruck beaufschlagten Flächen beidseits des Ventilstößels 20 aus, so dass der das Ventil öffnenden Kraft, insbesondere der Kraft aus dem Steuerdruck p, nur noch die Kraft der vorspannenden Feder entgegensteht. Dies würde, ohne Gegenmaßnahmen, zu einem schlagartigen Öffnen des Ventils und einer erheblichen Belastung des Ventilstößels 20 sowie der Feder führen.

Um dem vorzubeugen, wird das Ventil gemäß der Figur 6, insbesondere das Ventil 9.6 gemäß der Figur 1 durch variables Einstellen des zeitlichen Verlaufs der Betätigungskraft F beziehungsweise des Steuerdruckes p, wie er in der Figur 7 gezeigt ist, geöffnet. Dabei ist vorliegend die Betätigungskraft F beziehungsweise der Betätigungsdruck p, insbesondere ein pneumatischer Betätigungsdruck, über der Zeit aufgezeichnet. Wie man sieht, wird beim Zuschalten der hydrodynamischen Maschine 1 (Figur 1) der Steuerdruck p stoßartig (mit einem Impulsstoß) auf einen Maximalwert b angehoben. Der Maximalwert b kann zum Beispiel für eine bestimmte Dauer (Impulsdauer) aufrechterhalten werden, wie dies durch a angedeutet ist. Anschließend wird der Steuerdruck p bis auf einen Minimalwert c reduziert. Hiernach wird ausgehend vom Minimalwert c der Steuerdruck p (beziehungsweise die Betätigungskraft F) wie in den obigen Ausführungsbeispielen beschrieben auf den Nennwert (hier den Wert d) eingestellt, wobei durch variables Einstellen dieses zeitlichen Verlaufs der Betätigungskraft F beziehungsweise des Steuerdruckes p die Änderungsgeschwindigkeit des Strömungsquerschnitts für Arbeitsmedium in Abhängigkeit einer vorgegebenen Eingangsgröße verändert werden kann. Insbesondere sind auch andere Verläufe, wie zum Beispiel in den Figuren 2 bis 5 gezeigt, denkbar. Ferner ist es natürlich auch möglich, die Form beziehungsweise den Verlauf des Impulsstoßes zu ändern, insbesondere hinsichtlich der Werte a, b und c.

Der Minimalwert b und die Impulsdauer a können zum Beispiel durch Versuche, insbesondere bei unterschiedlichen Motordrehzahlen und Temperaturen des Arbeitsmediums, welches insbesondere zugleich das Kühlmedium des Motors ist, ermittelt werden. Wenn nämlich der Motor eine Kühlmediumpumpe antreibt, so werden bei verschiedenen Motordrehzahlen und infolge hieraus verschiedenen Pumpendrehzahlen und durch die verschiedenen Temperaturen des Kühlmediums unterschiedliche Systemüberdrücke im Kühlmediumkreislauf, der zugleich der Arbeitsmediumkreislauf sein kann, erreicht. Vorteilhaft können die Werte zum Einstellen des zeitlichen Verlaufs, insbesondere wie sie in der Figur 7 gezeigt sind, derart gewählt werden, dass die Druckabsenkung im Arbeitsmediumkreislauf (Kühlkreislauf) beim Zuschalten der hydrodynamischen Maschine minimal ist. Der Minimalwert c kann beispielsweise dem minimal einstellbaren Steuerdruck ensprechen.

Gleichzeitig sollte der zeitliche Verlauf der Betätigungskraft beziehungsweise des Steuerdruckes oder der sonstigen Stellgröße derart gewählt werden, dass die Einschaltzeit der hydrodynamischen Maschine einen Vorgabewert nicht überschreitet.

Der in der Figur 7 gezeigte Impulsstoß kann bei jedem Zuschalten der hydrodynamischen Maschine auch bei wiederholtem Zuschalten eingestellt werden.

Durch die erfindungsgemäße Lösung kann erreicht werden, dass die Ein- und Ausschaltzeiten - bei gleichzeitig minimalen Druckspitzen im Arbeitsmediumkreislauf - über dem gesamten Geschwindigkeits- und Motordrehzahlbereich des Fahrzeugs gleich sind, obwohl der Volumenstrom und/oder Druck im Arbeitsmediumkreislauf in Abhängigkeit der Fahrzeuggeschwindigkeit und/oder der Motordrehzahl variiert, oder dass eine gezielte Änderung der Schaltzeiten möglich ist.

### Bezugszeichenliste

- 1: hydrodynamische Maschine
- 2: externer Arbeitsmediumkreislauf
- 3: Primärrad
- 4: Sekundärrad
- 5: Arbeitsmediumzulauf
- 6: Arbeitsmediumablauf
- 7: Arbeitsraum
- 8: Steuerdruckventil
- 9: Füllsteuereinrichtung
- 9.1: Steuereinrichtung
- 9.2, 9.3, 9.4, 9.5: Sensor
- 9.6, 9.7: Ventil
- 9.8: Druckluftbehälter
- 10: Antriebsstrang
- 11: Antriebsräder
- 12: Getriebeabtriebswelle
- 13: Bremsanforderung
- 14: Getriebe
- 15: Verbrennungsmotor
- 16: Umwälzpumpe
- 17: Ausgleichsbehälter
- 18: Wärmetauscher
- 19: Nebenabtriebswelle
- 20: Ventilstößel
- 21: Ventilsitz
- 22: Dichtung

## Patentansprüche

1. Verfahren zur Vermeidung von Druckspitzen in einem Arbeitsmediumkreislauf (2), in dem eine hydrodynamische Maschine (1) betrieben wird, wobei
1.1 die hydrodynamische Maschine (1) ein Primärrad (3) und ein Sekundärrad (4) umfasst, die miteinander einen torusförmigen, über einen Arbeitsmediumzu- (5) und Arbeitsmediumablauf (6) befüllbaren und entleerbaren Arbeitsraum (7) ausbilden, um Drehmoment hydrodynamisch vom Primärrad (3) auf das Sekundärrad (4) zu übertragen;
**dadurch gekennzeichnet, dass**
1.2 beim Zu- und Abschalten der hydrodynamischen Maschine (1) die Änderungsgeschwindigkeit des Strömungsquerschnitts für Arbeitsmedium, das in den Arbeitsraum (7) und/oder aus diesem herausströmt, in Abhängigkeit einer vorgegebenen Eingangsgröße verändert wird.

2. Verfahren gemäß Anspruch 1, **dadurch gekennzeichnet, dass** die Änderungsgeschwindigkeit durch variables Einstellen des zeitlichen Verlaufs einer Stellgröße verändert wird, wobei als Stellgröße insbesondere ein Steuerdruck, die Betätigungskraft, der Betätigungsweg oder die Position eines Ventils (8, 9.6, 9.7) verwendet wird, und das Ventil (8, 9.6, 9.7) insbesondere ein pneumatisch, hydraulisch, mechanisch, elektrisch oder elektromagnetisch betätigtes Ventil (8, 9.6, 9.7) einer Füllsteuereinrichtung (9) ist, welche dem Einstellen eines Füllungsgrades im Arbeitsraum (7) der hydrodynamischen Maschine (1) dient.

3. Verfahren gemäß Anspruch 1 oder 2, **dadurch gekennzeichnet, dass** als Eingangsgröße der Druck und/oder die Temperatur des Arbeitsmediums dient, welche(r) gemessen oder berechnet wird.

4. Verfahren gemäß einem der Ansprüche 1 bis 3, **dadurch gekennzeichnet, dass** die Änderungsgeschwindigkeit des Strömungsquerschnitts, insbesondere der zeitliche Verlauf der Stellgröße in Abhängigkeit der einzustellenden oder aktuell erfassten Leistungsübertragung der hydrodynamischen Maschine, insbesondere der erfassten Primär- oder Sekundärraddrehzahl und/oder in Abhängigkeit der Leistung eines Antriebsmotors (15) oder dessen aktueller Drehzahl eingestellt wird.

5. Verfahren gemäß einem der Ansprüche 2 bis 4, **dadurch gekennzeichnet, dass** die Abhängigkeit des zeitlichen Verlaufes der Stellgröße von der Eingangsgröße in einem Kennfeld, einer Kennlinie und/oder einem Parametersatz hinterlegt ist, welche(s)/welcher insbesondere in einer Steuervorrichtung der hydrodynamischen Maschine (1) hinterlegt ist.

6. Verfahren gemäß einem der Ansprüche 1 bis 5, **dadurch gekennzeichnet, dass** als Eingangsgröße die Temperatur und/oder der Druck des Arbeitsmediums dient und bei einer höheren Temperatur und einem höheren Druck die Änderungsgeschwindigkeit des Strömungsquerschnitts für Arbeitsmedium im Vergleich zu einer niedrigeren Temperatur und einem niedrigeren Druck langsamer eingestellt wird.

7. Verfahren gemäß einem der Ansprüche 1 bis 6, **dadurch gekennzeichnet, dass** als Eingangsgröße die Drehzahl der hydrodynamischen Maschine (1) und/oder die Drehzahl einer im Arbeitsmediumkreislauf (2) angeordneten Umwälzpumpe (16) und/oder eines im Arbeitsmediumkreislauf (2) angeordneten Motors, insbesondere Verbrennungsmotors (15) herangezogen wird, und bei einer vergleichsweise höheren Drehzahl die Änderungsgeschwindigkeit des Strömungsquerschnittes für Arbeitsmedium kleiner eingestellt wird, als bei einer vergleichsweise niedrigeren Drehzahl.

8. Verfahren gemäß einem der Ansprüche 2 bis 7, **dadurch gekennzeichnet, dass** beim Zuschalten der hydrodynamischen Maschine (1) die Stellgröße zunächst impulsartig auf einen vorgegebenen Maximalwert (b) erhöht wird, um den Strömungsquerschnitt für Arbeitsmedium wenigstens teilweise stoßartig freizugeben, und anschließend die Stellgröße nach einer vorgegebenen Impulsdauer (a) auf einen vorgegebenen Minimalwert (c) reduziert wird und anschließend auf einen vorgegebenen Nennwert erhöht wird.

## Claims

1. A method of avoiding pressure peaks in a working medium circuit (2) in which a hydrodynamic machine (1) is operated, wherein
1.1 the hydrodynamic machine (1) includes a primary wheel (3) and a secondary wheel (4), which form together a toroidal working chamber (7) which can be filled and emptied via a working medium inlet (5) and a working medium outlet (6), for hydrodynamic transmission of torque from the primary wheel (3) to the secondary wheel (4);
**characterised in that**
1.2 when switching the hydrodynamic machine on and off (1), the rate of change of the flow cross-section for working medium flowing into the working chamber (7) and/or out of that, is changed according to a preset input variable.

2. The method according to claim 1, **characterised in that** the rate of change is varied by a variable adjustment of the time curve of a control variable, whereas in particular a control pressure, the actuating force, the actuating travel or the position of a valve (8, 9.6, 9.7) is used as a control variable, and the valve (8, 9.6, 9.7) is in particular a pneumatically, hydraulically, mechanically, electrically or electromagnetically actuated valve (8, 9.6, 9.7) of a filling control device (9), which is used for adjusting a filling level in the working chamber (7) of the hydrodynamic machine (1).

3. The method according to claim 1 or 2, **characterised in that** the pressure and/or the temperature of the working medium is used as input variable, which is measured or calculated.

4. The method according to one of the claims 1 to 3, **characterised in that** the rate of change of the flow cross-section, in particular the time curve of the control variable is adjusted according to the power transmission of the hydrodynamic machine which is to be set or is actually detected, in particular of the detected rotational speed of the primary wheel or secondary wheel and/or according to the power of a drive motor (15) or the current rotational speed thereof.

5. The method according to one of the claims 2 to 4, **characterised in that** the dependency of the time curve of the control variable on the input variable is stored in an characteristic diagram, a characteristic curve and/or a set of parameters, which is stored in particular in a control device of the hydrodynamic machine (1).

6. The method according to one of the claims 1 to 5, **characterised in that** the temperature and/or the pressure of the working medium serves as input variable and in the case of a higher temperature and a higher pressure the rate of change of the flow cross-section for working medium is adjusted to a slower value as compared to a lower temperature and a lower pressure.

7. The method according to one of the claims 1 to 6, **characterised in that** as input variable the rotational speed of the hydrodynamic machine (1) and/or the rotational speed of a circulation pump (16) arranged in the working medium circuit (2) and/or of a motor arranged in the working medium circuit (2), in particular of the internal combustion engine (15) is used, and in the case of a comparatively higher rotational speed, the rate of change of the flow cross-section for working medium is adjusted to a smaller value than in the case of a comparatively lower rotational speed.

8. The method according to one of the claims 2 to 7, **characterised in that** when switching the hydrodynamic machine (1) on, the control variable is first of all increased pulsative to a preset maximum (b) to release the flow cross-section for working medium at least partially jerkily, and subsequently the control variable is reduced after a preset impulse duration (a) to a preset minimum (c) and is subsequently increased to a preset nominal value.

## Revendications

1. Procédé permettant d'éviter les pointes de pression dans un circuit de fluide de travail (2), dans lequel une machine hydrodynamique (1) est actionnée, dans lequel
1.1 la machine hydrodynamique (1) comprend une roue primaire (3) et une roue secondaire (4), qui forment l'une avec l'autre une chambre de travail (7) toroïdale pouvant être remplie et vidée par le biais d'une arrivée de fluide de travail (5) et d'une sortie de fluide de travail (6), pour transmettre un couple de rotation de manière hydrodynamique de la roue primaire (3) à la roue secondaire (4),
**caractérisé en ce que**
1.2 la vitesse de changement des section d'écoulements pour le fluide de travail remplissant la chambre de travail (7) et/ou sortant de celle-ci, est modifiée en fonction d'une valeur d'entrée donnée, lorsque l'on allume et éteint la machine hydrodynamique (1).

2. Procédé selon la revendication 1, **caractérisé en ce que** l'on modifie la vitesse de changement en jouant sur le réglage de la courbe chronologique d'une variable de réglage, où l'on utilise notamment comme variable de réglage, une pression de commande, la force d'actionnement, la course d'actionnement ou la position d'une soupape (8, 9.6, 9.7) et la soupape (8, 9.6, 9.7) est notamment une soupape à commande pneumatique, hydraulique, mécanique, électrique ou électromagnétique (8, 9.6, 9.7) d'un dispositif de commande de remplissage, servant au réglage d'un niveau de remplissage dans la chambre de travail (7) de la machine hydrodynamique (1).

3. Procédé selon la revendication 1 ou 2, **caractérisé en ce que** la pression et/ou la température du fluide de travail sert de valeur d'entrée que l'on mesure ou l'on calcule.

4. Procédé selon l'une des revendications 1 à 3, **caractérisé en ce que** l'on règle la vitesse de changement de la section d'écoulement, en particulier la courbe temporaire de la variable de réglage en fonction de la transmission de puissance à ajuster ou effectivement déterminée, de la machine hydrodynamique, en particulier de la vitesse de rotation de la roue primaire ou de la roue secondaire déterminée et/ou en fonction de la puissance d'un moteur d'entraînement (15) ou de sa vitesse de rotation réelle.

5. Procédé selon l'une des revendications 2 à 4, **caractérisé en ce que** la dépendance entre la courbe chronologique de la variable de réglage et la valeur d'entrée est enregistré dans un champ caractéristique, une courbe caractéristique et/ou un ensemble de paramètres, mémorisés en particulier dans un dispositif de commande de la machine hydrodynamique (1).

6. Procédé selon l'une des revendications 1 à 5, **caractérisé en ce que** la température et/ou la pression du fluide de travail sert de valeur d'entrée et que, en présence d'une température plus élevée et d'une pression plus élevée, l'on règle la vitesse de changement de la section d'écoulement pour fluide de travail pour être plus lente qu'en présence d'une température plus basse et d'une pression plus basse.

7. Procédé selon l'une des revendications 1 à 6, **caractérisé en ce que** l'on utilise comme valeur d'entrée la vitesse de rotation de la machine hydrodynamique (1) et/ou la vitesse de rotation d'une pompe de recirculation (16) disposée dans le circuit de fluide de travail (2) et/ou d'un moteur disposé dans le circuit de fluide de travail (2), en particulier du moteur à combustion interne (15), et l'on règle la vitesse de changement de la section d'écoulement pour un fluide de travail sur une valeur plus petite en présence d'une vitesse de rotation comparativement plus élevée qu'en présence d'une vitesse de rotation comparativement inférieure.

8. Procédé selon l'une des revendications 2 à 7, **caractérisé en ce que** la variable de réglage commence par augmenter par impulsions pour atteindre une valeur maximale donnée (b) lorsque l'on allume la machine hydrodynamique (1) pour dégager par à-coups la section d'écoulement pour le fluide de travail au moins partiellement et puis l'on ramène la variable de réglage au bout d'une durée d'impulsion prédéterminée (a) à une valeur minimale prédéterminée (c) avant de la porter à une valeur nominale prédéterminée.
